Europäisches Patentamt

European Patent Office

Office européen des brevets

(11) Publication number: **0 151 021**
A2

(12) **EUROPEAN PATENT APPLICATION**

(21) Application number: **85300578.3**

(22) Date of filing: **29.01.85**

(51) Int. Cl.⁴: **F 16 D 41/07**

(30) Priority: **31.01.84 GB 8402531**

(43) Date of publication of application: **07.08.85**
**Bulletin 85/32**

(84) Designated Contracting States: **AT BE CH DE FR IT LI LU NL SE**

(71) Applicant: **RENOLD Plc, Renold House Styal Road, Wythenshawe Manchester M22 5WL (GB)**

(72) Inventor: **Hopkins, John Edward, 170 Finney Lane Heald Green, Cheadle Cheshire SK8 3PU (GB)**

(74) Representative: **Slight, Geoffrey Charles et al, Graham Watt & Co. Riverhead, Sevenoaks Kent TN13 2BN (GB)**

(54) **Improvements in uni-directional clutches.**

(57) A sprag clutch has its inner and outer races (10, 11) faced by hardened, sprag engaging surfaces formed by heat treating helically close coiled metal wires (20, 20') which are subsequently resiliently insprung and outsprung respectively into their assembled position in the inner and outer race bodies (10a, 11a).

EP 0 151 021 A2

## IMPROVEMENTS IN UNI-DIRECTIONAL CLUTCHES

The present invention relates to uni-directional clutches and concerns clutches having a radially inner and/or outer race. Among such clutches are sprag clutches and trapped roller clutches.

In simple form, a sprag clutch consists of a full complement of shaped steel sprags or wedges, located in an annular space between concentric inner and outer races. Power is transmitted from one race to the other by the wedging action of the sprags between them. Each sprag is so shaped that its dimension across one pair of diagonal corners is greater than across another pair of opposite diagonal corners. Rotation of one race in the "driving" direction causes the sprags to tilt, thus transmitting the torque in full from one race to the other. Conversely, rotation of the race in the other direction frees the sprags and permits over-running between the races. A tilting force keeps the sprags in light contact with both inner and outer races. There is thus no lost motion, the driving torque being instantaneously transmitted between races. Various spring arrangements may be used to provide the tilting force to energise the sprags, a typical one being an expanding coil spring.

A trapped roller clutch has a spring actuated roller cage of which the rollers are wedged in compression between radially inner or outer cam plane surfaces and the inside or outside diameter of an outer or inner race to transmit the power.

In clutches of these types, the power transmitting capacity must be dependent on the total load-carrying area of the race or races.

The surfaces of the races need to be hardened and then ground and subjecting the races to suitable heat treatment as a whole is expensive.

The use of hardened and ground liners in unheatreated bodies is well known but a conventional liner is unsuitable in a clutch race application because of liner distortion and retaining problems.

The present invention provides a clutch having an inner and/or an outer race having its hardened, wedging element engaged surface formed on a helically coiled metal wire.

The advantages of this, compared with using a conventional hardened and ground liner are:

(a) Easy assembly. By resiliently winding the coil of wire its diameter may be reduced or increased to enable it to be placed on the body of the race. On release, the coil springs out or in to grip the body. Removal for refurbishing purposes is equally as easy.  No force is needed.

(b)  In view of the manner of assembly close machining tolerances are no longer necessary to ensure a proper fit.

(c)  Forces from the wedging elements are transmitted through the coil or coils of wire thereby increasing the grip of the coil in or on its race body, thus preventing or helping to prevent movement of the coil.

(d)  Distortion of the coil from running temperature changes goes axially along the wire affecting the overall length of the coil, not its diameter.

Preferably, the wire is of quadrilateral shape in cross-section, having one side lying in the race surface and preferably also an opposite side lying in the surface of, e.g. a bore of the race body.

In the assembled condition it is preferred that adjacent turns of the wire coil are touching.

In this connection, it is to be understood that a close coiled helically coiled wire may be resiliently wound to reduce its diameter even although its adjacent turns are already touching in the free state.  The effect is simply to tighten the coil and increase its length.  Upon resiliently outspringing the coil, the adjacent turns may then remain touching in the assembled condition. By producing the close coiled helically coiled wire in a pre-tightened condition it may be resiliently unwound to increase its diameter and then resiliently insprung into its assembled condition with its adjacent turns touching.

A specific embodiment of the present invention as applied to a sprag clutch will now be described by way of example, and not by way of limitation, with reference to the accompanying drawings in which :-

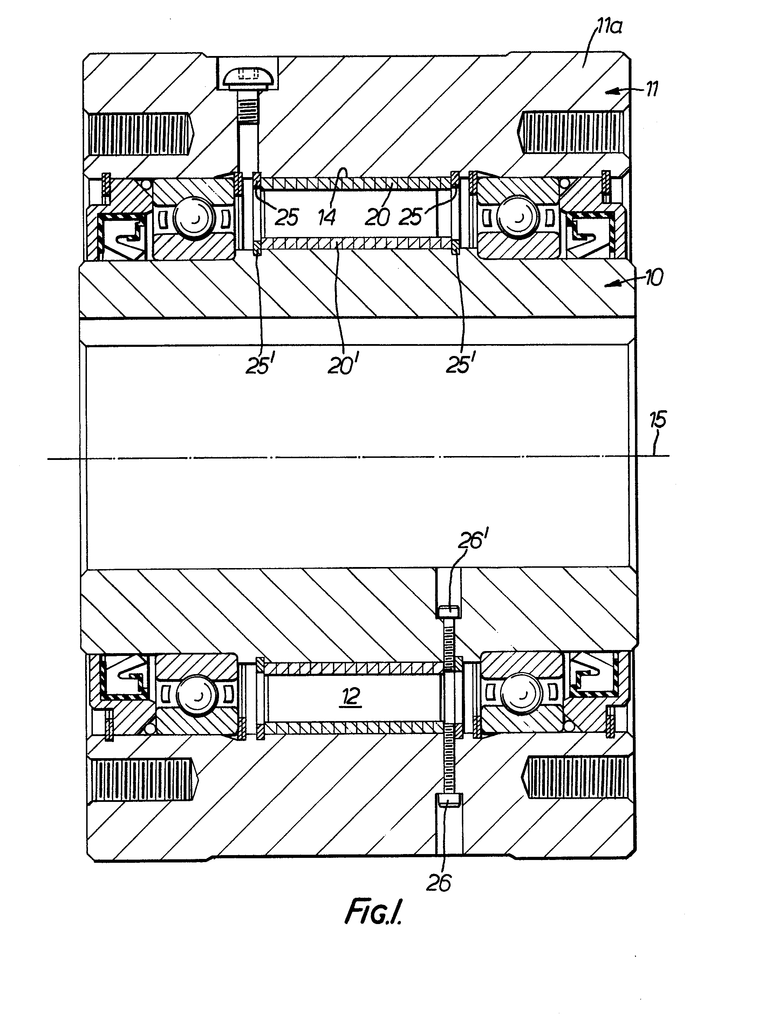

FIG. 1 is a cross-section of the clutch; and

FIGS. 2 and 3 are respectively a side view and an end view of a coiled wire liner for the outer race of the clutch.

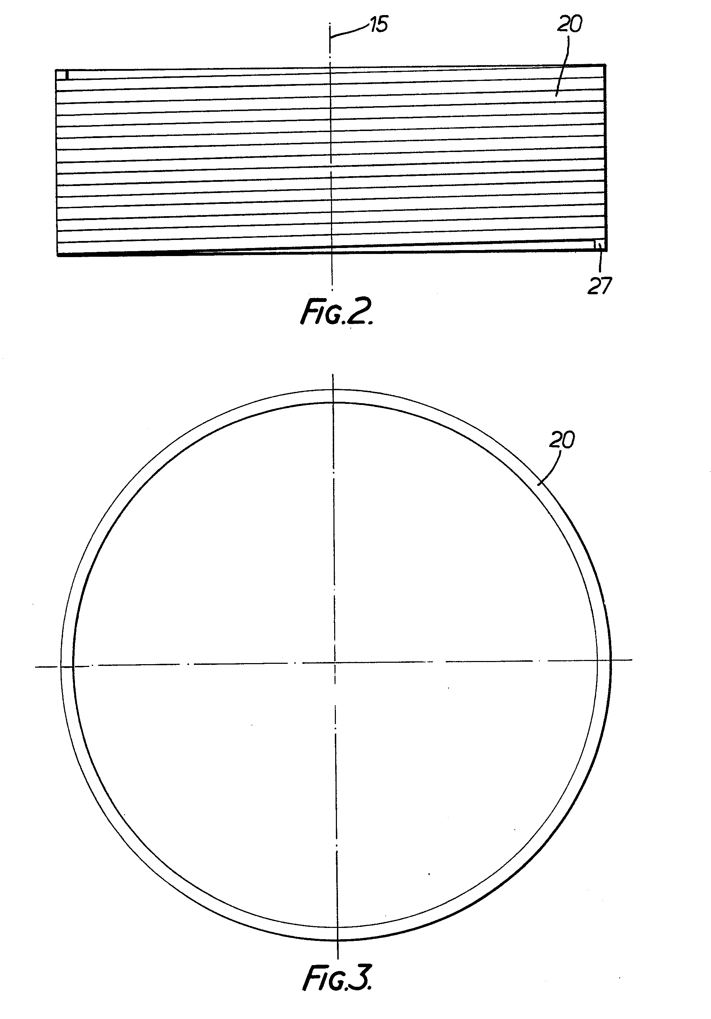

With reference to the accompanying drawings, the sprag clutch comprises concentric inner and outer races 10 and 11 and a ring of sprags 12 located in an annular space between the races. The sprags are energised by a pair of expanding coil springs (not shown) one at each side of the ring of sprags to engage the sprags with the race surfaces defining the respective circumferential sides of the annular space between the races. The body 11a of the outer race 11, which is not heat treated, has a bore 14 of a diameter larger than that required for the outer race surface lined with a close or substantially close coiled, helically coiled wire 20 of square sectioned metal which has been hardened and then internally ground to a specified diameter predeterminedly larger than the required outer race surface diameter, and thereafter mounted in the outer race bore 14 by resiliently outspringing its winding in the manner hereinbefore described. The helically coiled wire 20 is held in position in the bore 14 axially between two retaining rings 25 mounted in grooves in the outer race body and is prevented from rotation in the driving direction about the axis 15 of the clutch by means of a stop screw 26 screwed into the outer race body and engaging one end face 27 (see Fig. 2) of the wire.

The inner race surface may be similarly faced with a resiliently inspringing, close or substantially close coiled, helically coiled wire 20' again positioned axially between retaining rings 25' and stopped against rotation by a stop screw 26' if desired. Otherwise the inner race surface may be conventionally hardened and ground.

The helically coiled wire is typically of 8.71 mm **sq.** cross-section and composed of EN31 hardened to a tensile strength of 2000 to 2500 MN/m$^2$ and the outer race body 11a is made of mild steel.

The bore 14 of the body is typically of 460.93 mm in diameter with a tolerance of $\pm$ .025 mm and the helically coiled wire 20 is externally ground to a diameter of 461.09 mm with a tolerance of $\pm$ .025 mm with the coil in its free state. The adjacent turns of the coil are preferably touching in the assembled condition of the coil. The coil is resiliently wound through about $60^{\circ}$ to enable it to be placed in the outer race body 11a. In its free state the adjacent turns of the coil are touching. Resiliently winding the coil tightens the coil and increases its length by about 0.005 mm in the assembled condition of the coil.

Since the coil is resiliently outsprung into engagement with the outer race body there is a partial relaxing of its turns from the wound state. It is, of course, desirable to have adjacent turns of the coil touching in its assembled condition in order to reduce the loading on the outer race surface and increase the torque capacity of the clutch, but a small spacing between adjacent turns that can arise from manufacturing tolerances is acceptable, e.g. if in the outspringing example the coil is only substantially close coiled in its free state.

It will be understood that similar considerations apply to a helically coiled wire 20' which has been resiliently "in-sprung" to face an inner race body 10a and form the inner race surface.  In other words, whilst it is preferred that an "in-sprung" wire coil used for this purpose may have its adjacent turns in touching relation in the assembled condition of the coil, since it is to be resiliently unwound to increase its diameter for assembly and release for dismantling from the inner race body 10a, some spacing of the turns of the coil is acceptable.  Typically, for an inner race body diameter of 350.88 mm and using a helically coiled wire of 8.71 mm sq. cross-section to face that diameter it is suggested that the coil be ground initially to an internal diameter of 350.72 $\pm$ .025 mm and resiliently unwound by about 55$^{\circ}$ for assembly.   This reduces it length by about 0.005 mm in the assembled condition of the coil.

The inner race body 10a could, like the outer race body 11a, again be composed of mild steel but it is to be understood that it is conceivable that non-ferrous or plastics materials might be used to compose both these race bodies where both are to present a hardened race surface formed on a helically coild metal wire in accordance with the present invention.

Whilst retaining rings such as 25, 25' and stop screws such as 26, 26' have been described, these may not be necessary at least in certain clutch applications.

Thus resiliently outspringing or inspringing helically coiled wires used to compose respectively the outer and inner race surfaces may be held in position simply by the resilient gripping forces exerted by the coils, the coils being held resiliently deflected in their assembled condition. The helical coils may be wound directly from cold drawn wire and hardened without subsequent grinding. In this manner still further economies are achieved. It has been thought necessary, in prior art clutches, to grind the hardened race surface to remove distortion arising from heat treatment. Where the hardened race surface is formed on a helically coiled wire coil in accordance with the present invention however, it has been noted that the amount of distortion in the wire due to the heat treatment is slight and can often be tolerated. This is especially true if the coil is formed from cold drawn wire, the surface of which is already hardened to some degree by the cold drawing operation.

Where retaining rings 25, 25' and stop screws 26, 26' are provided, the rings 25, 25' are placed closely adjacent the ends of the helically coiled wires 20, 20' but providing adequate clearance to accommodate increase in length of the coil due to, temperature changes, ironing of the coil wire in use of the clutch, and so on. The stop screws 26, 26' are provided at one end only of each coil. Changes in the overall lengths of the wires of the coils are, therefore, accommodated at the other end of each coil in each case.

CLAIMS:

1. A uni-directional clutch having an inner and/or an outer race and wedging elements for engaging a hardened surface of the inner and/or outer race to transmit drive in one direction characterized in that the hardened wedging element engaged surface on the or at least one of the races (10, 11) is formed on a helically coiled metal wire (20, 20').

2. A clutch as claimed in claim 1 in which the wire is of quadrilateral shape in cross-section having one side lying in the race surface.

3. A clutch as claimed in claim 2 in which the wire (20) has an opposite side lying in the surface of a bore (14) of the race body (11a).

4. A clutch as claimed in claim 2 in which the wire (20') has an opposite side lying in the outer surface of an inner race body (10a).

5. A clutch as claimed in any preceding claim in which the helically coiled metal wire (20 or 20') has its adjacent turns touching one another.

6. A clutch as claimed in any preceding claim in which the coils of the helically coiled metal wire (20 or 20') have been hardened without subsequent grinding.

7. A clutch as claimed in claim 6 in which the coils of the helically coiled metal wire (20 or 20') have been wound directly from cold drawn wire.

1/2

0151021

Fig.I.

0151021

15

20

27

**Fig.2.**

20

**Fig.3.**